# FASCICULE DE BREVET EUROPEEN

(11) **EP 4 298 322 B1**
(45) Date de publication et mention de la délivrance du brevet: **18.11.2026**
(21) Numéro de dépôt: 22703020.2
(22) Date de dépôt: 05.01.2022
(51) Int. Cl.: F01D 15/10, F02C 6/00, F02C 7/143, F02C 3/36, F02C 6/18, F02C 6/20, F02C 7/08, B60K 3/04, B60K 6/00, F01D 15/02, B60K 6/20

(54) **DISPOSITIF DE TURBOMACHINE A GENERATEUR, SYSTEME D'ALIMENTATION ET VEHICULE COMPRENANT UN TEL DISPOSITIF**
TURBOMASCHINE MIT GENERATOR, LADESYSTEM UND FAHRZEUG MIT EINEM SOLCHEN SYSTEM
TURBOMACHINE HAVING A GENERATOR, CHARGING SYSTEM AND VEHICLE COMPRISING SUCH SYSTEM

(30) Priorité: 26.02.2021 FR 2101906
(43) Date de publication de la demande: 03.01.2024
(73) Titulaire: Stellantis Auto SAS, 78300 Poissy (FR)
(72) Inventeur: BOU NADER, Wissam, 91120 PALAISEAU (FR)
(74) Mandataire: PSIP
(86) Numéro de dépôt international: PCT/FR2022/050024
(87) Numéro de publication internationale: WO 2022/180311

(56) Documents cités:
- WO-A2-2008/087685
- DE-C- 854 605
- FR-A1- 3 107 558
- US-A1- 2002 152 754

## Description

L'invention se rapporte au domaine des dispositifs et systèmes des turbomachines du type à cycle turbine à gaz avec compression refroidie, régénérateur et réchauffe durant la détente (IRReGT). Ce type de turbomachine comprend généralement des turbines et compresseurs associés à des chambres de combustion avec une récupération de chaleur. L'invention concerne en particulier des applications utiles pour des véhicules automobiles.

Le cycle turbogénérateur avec refroidisseur (« intercooler »), récupérateur et échangeur de chaleur de type IRReGT (« *Intercooled Regenerative Reheat Gas Turbine* ») est un cycle à fort potentiel. Ce cycle permet d'atteindre un rendement très important mais aussi une densité de puissance très élevée (travail net spécifique élevé).

Le cycle IRReGT, bien qu'offrant un intérêt en terme de rendement et travail net spécifique, présente un inconvénient majeur : le besoin de deux compresseurs pour pouvoir réaliser une compression refroidie et de deux turbines pour pouvoir réaliser une détente avec réchauffe intermédiaire.

Cela ajoute des inconvénients de complexité d'intégration en raison de la longueur de l'axe commun ; de problématique de contrôle du régime optimal car chaque turbomachine (compresseur ou turbine) opère à un régime optimal propre ; de vibration, d'équilibrage, usinage spécial du fait du long axe des turbocompresseurs, impliquant en outre de respecter une intégration dans laquelle les turbomachines sont sur le même axe.

En outre, l'état de la technique est connu du document US2002152754A1.

Ainsi, un objectif de la présente invention est de proposer une architecture intégrable qui permet de résoudre les problèmes mentionnés ci-avant.

Pour atteindre cet objectif, l'invention concerne un dispositif de turbomachine pour véhicule automobile, le dispositif comprenant
- un premier turbocompresseur comprenant un premier compresseur, une première turbine et un premier générateur électrique;
- un deuxième turbocompresseur comprenant un deuxième compresseur, une deuxième turbine et un deuxième générateur électrique;
- deux chambres de combustion ;
- un refroidisseur de flux connecté au premier compresseur et au deuxième compresseur ;
- un échangeur thermique connecté au deuxième compresseur et à une première chambre de combustion, elle-même étant connectée à la première turbine, la deuxième chambre de combustion étant connectée aux deux turbines ;

le dispositif étant configuré pour mettre en œuvre un flux de fluide du premier compresseur vers le refroidisseur, vers le deuxième compresseur, vers l'échangeur thermique, vers la première chambre de combustion, vers la première turbine, vers la deuxième chambre de combustion, vers la deuxième turbine,
dans lequel les turbocompresseurs sont montés sur des axes séparés, les deux axes étant sensiblement contigus, l'un à côté de l'autre dans une direction sensiblement parallèle aux deux axes, le premier axe comportant la première turbine en dehors, le premier compresseur en dedans, le deuxième axe comportant la deuxième turbine en dehors et le deuxième compresseur en dedans.

Avantageusement, l'agencement du dispositif selon l'invention permet d'avoir une architecture facilement intégrable en séparant les deux turbocompresseurs sans nécessiter d'avoir un long axe commun avec un sens de rotation commun.

Selon d'autres aspects pris isolément, ou combinés selon toutes les combinaisons techniquement réalisables :
- le dispositif est agencé en une partie chaude comprenant des éléments à haute température, et une partie froide séparée de la partie chaude, comprenant des éléments à basse température ; et/ou
- le refroidisseur est disposé d'un côté avant ou arrière des deux axes, et les chambres de combustion sont disposées d'un autre côté arrière ou avant des deux axes ; et/ou
- les générateurs électriques sont disposés à une même extrémité externe ou interne des axes.

L'invention porte en outre sur un système d'alimentation pour véhicule automobile comprenant un dispositif de turbomachine selon l'invention connecté à un boitier de puissance configuré pour être connecté au véhicule automobile.

Un autre objet de l'invention est un véhicule automobile comprenant un dispositif de turbomachine selon l'invention ou un système d'alimentation selon l'invention.

L'invention sera davantage détaillée par la description de modes de réalisation non limitatifs, et sur la base des figures annexées illustrant des variantes de l'invention, dans lesquelles :
- [Fig.1] illustre un schéma fonctionnel d'un dispositif de turbomachine selon un premier mode de réalisation préféré de l'invention ;
- [Fig.2] illustre schématiquement une vue de dessus d'un dispositif de turbomachine selon le premier mode de réalisation ;
- [Fig.3] illustre schématiquement un premier agencement de dispositif de turbomachine selon le premier mode de réalisation dans un système d'alimentation pour véhicule automobile ;

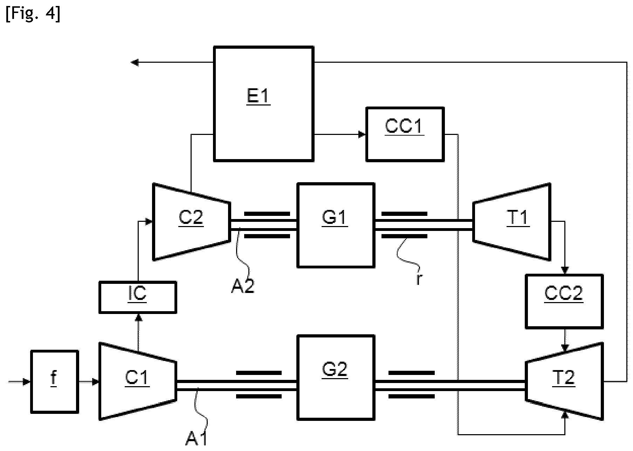

- [Fig.4] illustre un schéma fonctionnel d'un dispositif de turbomachine selon un deuxième mode de réalisation préféré ;

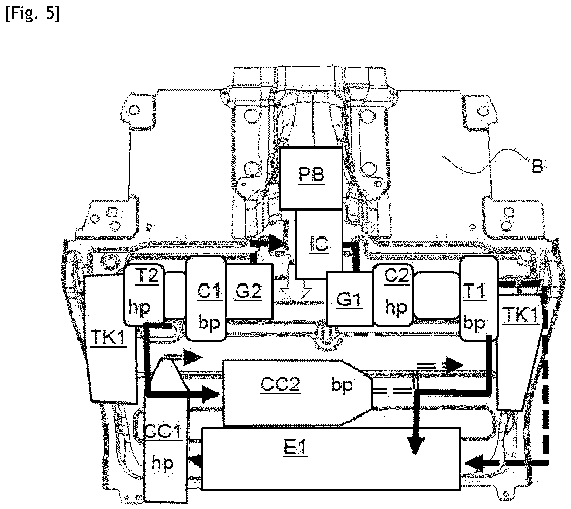

- [Fig.5] illustre schématiquement un premier agencement de dispositif de turbomachine selon le deuxième mode de réalisation dans un système d'alimentation pour véhicule automobile ; et

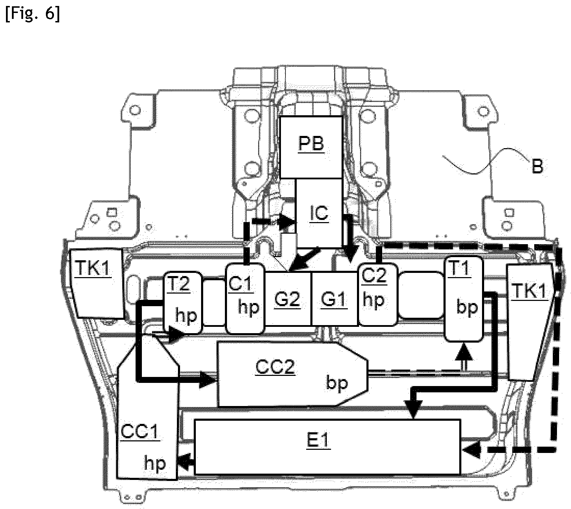

- [Fig.6] illustre schématiquement un deuxième agencement de dispositif de turbomachine selon le deuxième mode de réalisation dans un système d'alimentation pour véhicule automobile.

L'invention concerne un dispositif de turbomachine du type à cycle turbine à gaz avec compression refroidie, régénérateur et réchauffe durant la détente (IRReGT). L'invention concerne en particulier des applications utiles pour des véhicules automobiles.

Le dispositif de turbomachine comprend un premier turbocompresseur et un deuxième turbocompresseur.

Le premier turbocompresseur comprend un premier compresseur C1 et une première turbine T2.

Le deuxième turbocompresseur comprend un deuxième compresseur C2 et une deuxième turbine T1.

En particulier, il s'agit de turbomachines (compresseurs et turbines), de type radiales. Sur ce type de machine, le fluide de travail, air en cas du compresseur et gaz dans le cas de la turbine, ont une trajectoire radiale entre l'entrée et la sortie.

Les turbocompresseurs sont de préférence électrifiés, c'est-à-dire qu'ils comportent chacun un générateur électrique G1, G2. Dans la variante préférée, il s'agit d'une machine électrique opérant à la fois en mode moteur et générateur, c'est-à-dire moteur pour entraîner et démarrer le système ; et générateur pour récupérer l'énergie. La référence r concerne des roulements.

Le dispositif de turbomachine comprend en outre deux chambres de combustion CC1 et CC2, et un refroidisseur de flux IC.

Le refroidisseur de flux IC est connecté au premier compresseur C1 et au deuxième compresseur C2.

Le dispositif de turbomachine comprend en outre un échangeur thermique E1. L'échangeur thermique E1 est connecté au deuxième compresseur C2 et à une première chambre de combustion CC1.

La première chambre de combustion CC1 est en outre connectée à la deuxième turbine T1 dans un premier mode de réalisation, ou à la première turbine T2 dans un deuxième mode de réalisation.

La deuxième chambre de combustion CC2 est connectée aux deux turbines T1, T2.

Le dispositif est configuré pour mettre en œuvre un flux de fluide F1 du premier compresseur C1 vers le refroidisseur IC. Le flux F1 passe ensuite du refroidisseur IC vers le deuxième compresseur C2. Le flux F1 passe ensuite du deuxième compresseur C2 vers l'échangeur thermique E1. Le flux F1 passe ensuite de l'échangeur thermique E1 vers la première chambre de combustion CC1. Le flux F1 passe ensuite de la première chambre de combustion CC1 vers la deuxième turbine T1 dans le premier mode de réalisation ou vers la première turbine T2 dans le deuxième mode de réalisation. Le flux F1 passe ensuite vers la deuxième chambre de combustion CC2, puis vers la première turbine T2 dans le premier mode de réalisation ou vers la deuxième turbine T1 dans le deuxième mode de réalisation.

Selon un aspect de l'invention, les turbocompresseurs sont montés sur des axes A1, A2 séparés.

Avantageusement, l'agencement du dispositif selon l'invention permet d'avoir une architecture facilement intégrable en séparant les deux turbocompresseurs sans nécessiter d'avoir un long axe commun avec un sens de rotation commun. Le fait d'avoir deux turbocompresseurs chacun sur son axe, au lieu d'un seul, permet de réduire la longueur de l'axe, et d'avoir plus de flexibilités vis-à-vis des points de fonctionnement ainsi que vis-à-vis de l'intégration.

Comparé aux solutions connues, l'invention permet de réduire la complexité d'un dispositif turbogénérateur utilisant un cycle thermodynamique type IRReGT. En effet, le fait d'avoir deux axes permet en outre d'avoir plus de degré de liberté sur le positionnement des composants ; de réduire le nombre de coudes ; d'approcher les composants l'un de l'autre, d'éloigner les composants chauds (tels que l'échangeur de chaleur E1, les chambres de combustions CC1, CC2, les turbines T1, T2) des composants froids (tels que les compresseurs C1, C2, le refroidisseur IC, ainsi que les machines électriques).

Cela permet donc de réduire la complexité du dispositif, de réduire les contraintes de fabrication du système, de réduire la masse totale de la machine et de minimiser le volume total.

Tous ces avantages sont bénéfiques pour une optimiser un turbogénérateur conçu pour être intégré dans une chaîne de traction automobile.

En particulier, le premier turbocompresseur forme un étage « basse pression - bp », et le deuxième turbocompresseur forme un étage « haute pression - hp »

Selon la variante désirée, on peut également coupler le deuxième compresseur C2 (compresseur HP) à la première turbine T2 (turbine BP) en fonction de l'équilibrage des puissances.

Selon une variante, les générateurs électriques G1, G2 sont sur chacun desdits axes.

Selon une variante, les deux axes A1, A2 sont sensiblement contigus, c'est-à-dire l'un à côté de l'autre dans une direction sensiblement parallèle ou oblique.

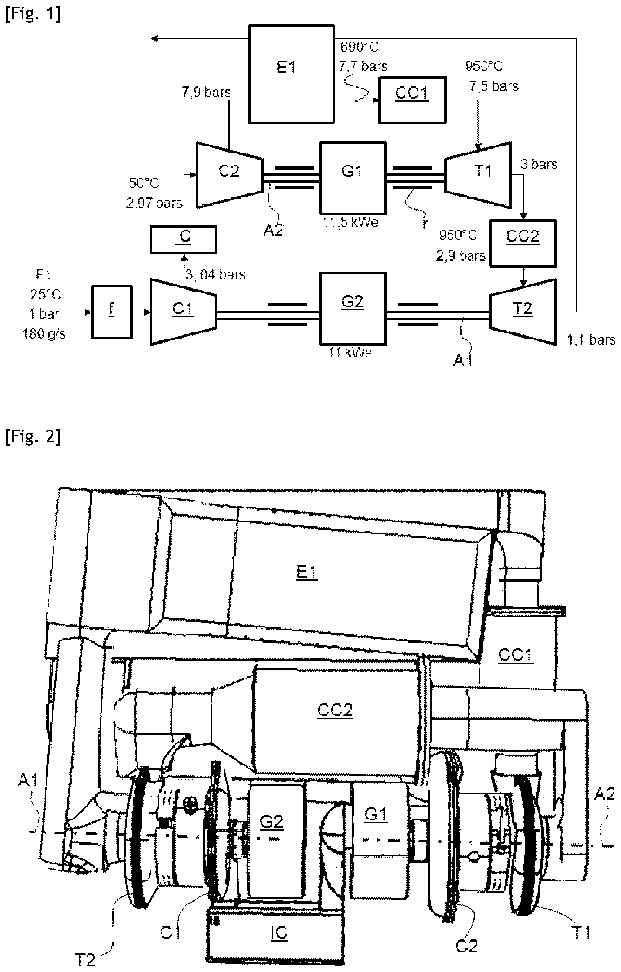

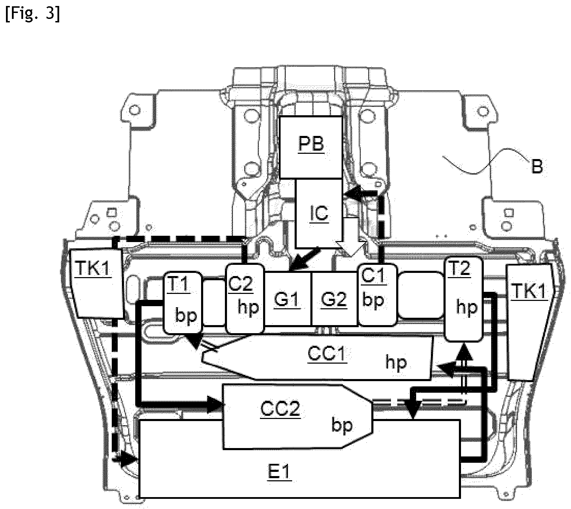

Dans la configuration contigüe, le premier axe A1 comporte la première turbine T2 en dehors, c'est-à-dire en position externe ; et le premier compresseur C1 en dedans, c'est-à-dire en position interne. En outre, le deuxième axe A2 comporte la deuxième turbine T1 en dehors ; et le deuxième compresseur C2 en dedans. Cette variante peut être illustrée par les figures 2 et 3. Avantageusement, cela permet de disposer des composants de part et d'autre des axes et de mettre en œuvre une structure symétrique. Par exemple, les générateurs électriques G1, G2 peuvent être disposés entre les deux axes A1, A2, en particulier avec les turbocompresseurs aux extrémités externes; ou inversement.

L'échangeur E1 ou récupérateur étant la pièce la plus longue, prend tout le long d'un boitier B à l'arrière. Cela permet ainsi de faire le centrage du centre de gravité du système.

Selon une variante, le dispositif de turbomachine est agencé en parties séparées de température différentes, en particulier une partie chaude comprenant des éléments à haute température, et une partie froide séparée de la partie chaude, comprenant des éléments à basse température.

De préférence, le refroidisseur IC est disposé d'un côté avant ou arrière des deux axes A1, A2, et les chambres de combustion CC1, CC2 sont disposées d'un autre côté arrière ou avant des deux axes A1, A2, en particulier dans la variante avec les axes A1, A2 contigus. Cette variante peut être illustrée par les figures 2 (avant en bas) ; et 3, 4, 5 (avant en haut).

Avantageusement, cela permet d'aligner les turbocompresseurs transversalement en positionnant les compresseurs C1, C2 en interne. Le refroidisseur IC peut être positionné entre les compresseurs C1, C2. Ainsi, les composants froids sont disposés au milieu.

Sur les deux extrémités externes des turbocompresseurs sont positionnés les turbines ; et dernière, les chambres de combustion CC1, CC2 et le récupérateur E1. Ainsi les composants chauds sont à l'arrière.

En choisissant cette architecture, cela permet de mettre des écrans thermiques entre la zone froide et la zone chaude (composants froids et composants chauds). Cette architecture permet d'intégrer l'ensemble dans un volume fonctionnel réduit.

L'invention concerne en outre un système d'alimentation pour véhicule automobile comprenant un dispositif de turbomachine tel que décrit précédemment. Le dispositif est connecté à un boitier de puissance PB configuré pour être connecté au véhicule automobile.

En effet, le dispositif selon l'invention peut être intégré dans un boîtier B du type pack batterie pour véhicule électrique. Cela permettrait de remplacer une certaine capacité en kWh de batterie par un système turbogénérateur sur la base du dispositif de turbomachine de l'invention.

Le système d'alimentation peut aussi être utilisé comme prolongateur d'autonomie.

Un autre objet de l'invention a trait à un véhicule automobile comprenant un dispositif de turbomachine tel que décrit précédemment. Il en particulier d'un véhicule à moteur de traction électrique de préférence de type hybride. Les références TK concernent des réservoirs de carburant.

## Revendications

1. Dispositif de turbomachine pour véhicule automobile, le dispositif comprenant
- un premier turbocompresseur comprenant un premier compresseur (C1), une première turbine (T2) et un premier générateur électrique (G2) ;
- un deuxième turbocompresseur comprenant un deuxième compresseur (C2), une deuxième turbine (T1) et un deuxième générateur électrique (G1) ;
- deux chambres de combustion (CC1, CC2) ;
- un refroidisseur (IC) de flux connecté au premier compresseur (C1) et au deuxième compresseur (C2) ;
- un échangeur thermique (E1) connecté au deuxième compresseur (C2) et à une première chambre de combustion (CC1), elle-même étant connectée à la deuxième turbine (T1) ou à la première turbine (T2), la deuxième chambre de combustion (CC2) étant connectée aux deux turbines ;
le dispositif étant configuré pour mettre en œuvre un flux de fluide (F1) du premier compresseur (C1) vers le refroidisseur (IC), vers le deuxième compresseur (C2), vers l'échangeur thermique (E1), vers la première chambre de combustion (CC1), vers la deuxième turbine (T1) ou la première turbine (T2), vers la deuxième chambre de combustion (CC2), vers la première turbine (T2) ou la deuxième turbine (T1),
dans lequel les turbocompresseurs sont montés sur des axes (A1, A2) séparés, **caractérisé en ce que**
les deux axes (A1, A2) étant sensiblement contigus, l'un à côté de l'autre dans une direction sensiblement parallèle aux deux axes, le premier axe (A1) comportant la première turbine (T2) en dehors, le premier compresseur (C1) en dedans, le deuxième axe (A2) comportant la deuxième turbine (T1) en dehors et le deuxième compresseur (C2) en dedans.

2. Dispositif de turbomachine selon la revendication 1, **caractérisé en ce qu'**il est agencé en une partie chaude comprenant des éléments à haute température, et une partie froide séparée de la partie chaude, comprenant des éléments à basse température.

3. Dispositif de turbomachine selon la revendication 1 ou 2, **caractérisé en ce que** le refroidisseur (IC) est disposé d'un côté avant ou arrière des deux axes (A1, A2), et les chambres de combustion (CC1, CC2) sont disposées d'un autre côté arrière ou avant des deux axes (A1, A2).

4. Dispositif de turbomachine selon l'une quelconque des revendications 1 à 3, **caractérisé en ce que** les générateurs électriques (G1, G2) sont disposés à une même extrémité externe ou interne des axes (A1, A2).

5. Système d'alimentation (B) pour véhicule automobile comprenant un dispositif de turbomachine selon l'une quelconque des revendications 1 à 4 connecté à un boîtier de puissance (PB) configuré pour être connecté au véhicule automobile.

6. Véhicule automobile comprenant un dispositif de turbomachine selon l'une quelconque des revendications 1 à 4 ou un système d'alimentation selon la revendication 5.

## Patentansprüche

1. Turbomaschinenvorrichtung für ein Kraftfahrzeug, wobei die Vorrichtung umfasst
- einen ersten Turbolader, der einen ersten Verdichter (C1), eine erste Turbine (T2) und einen ersten elektrischen Generator (G2) umfasst;
- einen zweiten Turbolader, der einen zweiten Verdichter (C2), eine zweite Turbine (T1) und einen zweiten elektrischen Generator (G1) umfasst;
- zwei Brennkammern (CC1, CC2);
- einen Strömungskühler (IC), der mit dem ersten Verdichter (C1) und dem zweiten Verdichter (C2) verbunden ist;
- einen Wärmetauscher (E1) (C2) und einer ersten Brennkammer (CC1), die ihrerseits mit der zweiten Turbine (T1) oder der ersten Turbine (T2) verbunden ist, wobei die zweite Brennkammer (CC2) mit beiden Turbinen verbunden ist, wobei die Vorrichtung ausgebildet ist, um einen Fluidstrom (F1) von dem ersten Verdichter (C1) zu dem Kühler (IC), zu dem zweiten Verdichter (C2), zu dem Wärmetauscher (E1), zu der ersten Brennkammer (CC1), zu der zweiten Turbine (T1) oder der ersten Turbine (T2) zu der zweiten Brennkammer bereitzustellen (CC2) zur ersten Turbine (T2) oder zur zweiten Turbine (T1), bei der die Turbolader auf getrennten Achsen (A1, A2) angeordnet sind, **dadurch gekennzeichnet, dass** wobei die beiden Achsen (A1, A2) im Wesentlichen aneinander angrenzen, und zwar nebeneinander in einer Richtung, die im Wesentlichen parallel zu den beiden Achsen verläuft, wobei die erste Achse (A1) die erste Turbine (T2) außen, der erste Kompressor (C1) innen, die zweite Achse (A2) die zweite Turbine (T1) außen und der zweite Kompressor (C2) innen aufweist.

2. Turbomaschinenvorrichtung nach Anspruch 1, **dadurch gekennzeichnet, dass** sie in einem warmen Teil, der Elemente mit hoher Temperatur umfasst, und einem von dem warmen Teil getrennten kalten Teil, der Elemente mit niedriger Temperatur umfasst, angeordnet ist.

3. Turbomaschinenanordnung nach Anspruch 1 oder 2, **dadurch gekennzeichnet, dass** der Kühler (IC) an einer Vorder- oder Rückseite der beiden Achsen (A1, A2) und die Brennräume (CC1, CC2) an einer anderen Hinterseite oder Vorderseite der beiden Achsen (A1, A2) angeordnet sind.

4. Turbomaschinenvorrichtung nach einem der Ansprüche 1 bis 3, **dadurch gekennzeichnet, dass** die elektrischen Generatoren (G1, G2) an demselben äußeren oder inneren Ende der Achsen (A1, A2) angeordnet sind.

5. Stromversorgungssystem (B) für ein Kraftfahrzeug, das eine Turbomaschinenvorrichtung nach einem der Ansprüche 1 bis 4 umfasst, die mit einem Leistungsgehäuse (PB) verbunden ist, das zur Verbindung mit dem Kraftfahrzeug konfiguriert ist.

6. Kraftfahrzeug mit einer Turbomaschinenvorrichtung nach einem der Ansprüche 1 bis 4 oder einem Zufuhrsystem nach Anspruch 5.

## Claims

1. Turbomachine device for a motor vehicle, the device comprising
- a first turbocharger comprising a first compressor (C1), a first turbine (T2) and a first electrical generator (G2);
- a second turbocharger comprising a second compressor (C2), a second turbine (T1) and a second electrical generator (G1);
- two combustion chambers (CC1, CC2);
- a flow cooler (IC) connected to the first compressor (C1) and the second compressor (C2);
- a heat exchanger (E1) (C2) and a first combustion chamber (CC1) connected in turn to the second turbine (T1) or the first turbine (T2), the second combustion chamber (CC2) being connected to both turbines wherein
the device is designed to provide a fluid flow (F1) from the first compressor (C1) to the cooler (IC), to the second compressor (C2), to the heat exchanger (E1), to the first combustion chamber (CC1), to the second turbine (T1) or the first turbine (T2) to the second combustion chamber (CC2) to the first turbine (T2) or to the second turbine (T1), in which the turbochargers are arranged on separate axes (A1, A2), **characterized in that** wherein the two axes (A1, A2) are substantially adjacent to each other in a direction substantially parallel to the two axes, the first axis (A1) having the first turbine (T2) on the outside, the first compressor (C1) on the inside, the second axis (A2) having the second turbine (T1) on the outside and the second compressor (C2) on the inside.

2. Turbomachine device according to Claim 1, **characterized in that** it is arranged in a warm part comprising high-temperature elements and a cold part, which is separate from the warm part and comprises low-temperature elements.

3. Turbomachine arrangement according to Claim 1 or 2, **characterized in that** the cooler (IC) is arranged on a front side or rear side of the two axes (A1, A2) and the combustion chambers (CC1, CC2) are arranged on another rear side or front side of the two axes (A1, A2).

4. Turbomachine device according to one of Claims 1 to 3, **characterized in that** the electrical generators (G1, G2) are arranged at the same outer or inner end of the axes (A1, A2).

5. Power supply system (B) for a motor vehicle, comprising a turbomachine device according to any one of claims 1 to 4, which is connected to a power housing (PB), which is configured for connection to the motor vehicle.

6. A motor vehicle having a turbomachine device according to any one of claims 1 to 4 or a feed system according to claim 5.
